# EUROPÄISCHE PATENTSCHRIFT

(11) **EP 2 926 638 B1**
(45) Veröffentlichungstag und Bekanntmachung des Hinweises auf die Patenterteilung: **06.02.2019**
(21) Anmeldenummer: 15159133.6
(22) Anmeldetag: 16.03.2015
(51) Int. Cl.: A01B 59/041

(54) **STABILISATOR FÜR EINEN UNTERLENKER EINES DREIPUNKTGERÄTEANBAUS EINES TRAKTORS**
STABILISER FOR A LOWER LINK OF A THREE-POINT DEVICE EXTENSION OF A TRACTOR
STABILISATEUR POUR UNE BARRE INFÉRIEURE D'UNE PRISE DE FORCE À TROIS POINTS D'UN TRACTEUR

(30) Priorität: 21.03.2014 DE 102014205281
(43) Veröffentlichungstag der Anmeldung: 07.10.2015
(73) Patentinhaber: Deere & Company, Moline, IL 61265 (US)
(72) Erfinder: Heitlinger, Martin, 76684 Östringen (DE); Mayer, Klaus, 64754 Hesseneck-Kailbach (DE); Onken, Hanko, 68239 Mannheim (DE)
(74) Vertreter: Dehnhardt, Florian Christopher

(56) Entgegenhaltungen:
- EP-A1- 1 342 399
- EP-A2- 2 232 973
- DE-A1-102011 081 274
- DE-C1- 4 310 027
- US-A1- 2012 153 552

## Beschreibung

Die Erfindung betrifft einen Stabilisator für einen Unterlenker eines Dreipunktgeräteanbaus eines Traktors, mit einem ersten Stabilisatorglied und einem gegenüber dem ersten Stabilisatorglied entlang einer gemeinsamen Längsachse federbeweglich gelagerten zweiten Stabilisatorglied, wobei ein mit dem ersten Stabilisatorglied verbundenes erstes Begrenzungsmittel vorgesehen ist, das in einer geschlossenen Stellung einen mit dem zweiten Stabilisatorglied zusammenwirkenden ersten Anschlag zur Begrenzung einer zwischen den beiden Stabilisatorgliedern auftretenden Einfederbewegung bildet.

Ein derartiger Stabilisator für einen Unterlenker eines Dreipunktgeräteanbaus an einem Traktor ist beispielsweise aus der EP 2 232 973 A2 bekannt. Der zwischen einer heckseitigen Befestigungsstelle des Traktors und einem Unterlenker des Dreipunktgeräteanbaus gelenkig angebrachte Stabilisator umfasst ein erstes und ein zweites Stabilisatorglied, wobei die beiden Stabilisatorglieder derart längsbeweglich ineinander geführt sind, dass sich diese entgegen einer rückstellenden Federkraft gegeneinander auslenken lassen. Eine an dem ersten Stabilisatorglied schwenkbar angebrachte Sperrklappe dient der Begrenzung einer zwischen den beiden Stabilisatorgliedern auftretenden Einfederbewegung, indem die Sperrklappe in einer geschlossenen Stellung einen mit einem Begrenzungskragen des zweiten Stabilisatorglieds zusammenwirkenden einseitigen Anschlagbereich bildet. Wird die Sperrklappe des Stabilisators in eine geöffnete Stellung verbracht, so vermögen die beiden Stabilisatorglieder eine im Wesentlichen freie Einfederbewegung auszuführen, deren Umfang lediglich durch einen zugehörigen baulich bedingten und insofern festen Endanschlag innerhalb des Stabilisators begrenzt wird. Je nach Stellung der Sperrklappe lässt sich daher eine Seitwärtsbewegung eines mit dem Stabilisator ausgestatteten Unterlenkers entweder vollständig blockieren oder aber im Rahmen der baulichen Gegebenheiten des Stabilisators freigeben.

Weitere mittels einer Sperrklappe blockierbare Stabilisatoren ähnlicher Bauart gehen aus EP 1 342 399 A1, DE 43 10 027 C1, DE 10 2011 081274 A1 und US 2012/15352 A1 hervor.

Aufgabe der vorliegenden Erfindung ist es, einen bezüglich seiner Anpassungsmöglichkeiten verbesserten Stabilisator der eingangs genannten Art anzugeben.

Diese Aufgabe wird durch einen Stabilisator mit den Merkmalen des Patentanspruchs 1 gelöst.

Der Stabilisator für einen Unterlenker eines Dreipunktgeräteanbaus eines Traktors umfasst ein erstes Stabilisatorglied und ein gegenüber dem ersten Stabilisatorglied entlang einer gemeinsamen Längsachse federbeweglich gelagertes zweites Stabilisatorglied, wobei ein mit dem ersten Stabilisatorglied verbundenes erstes Begrenzungsmittel vorgesehen ist, das in einer geschlossenen Stellung einen mit dem zweiten Stabilisatorglied zusammenwirkenden ersten Anschlag zur Begrenzung einer zwischen den beiden Stabilisatorgliedern auftretenden Einfederbewegung bildet. Erfindungsgemäß ist zwischen den beiden Stabilisatorgliedern ein zweites Begrenzungsmittel vorgesehen, das einen zweiten Anschlag zur Begrenzung der Einfederbewegung gegenüber einem zugehörigen festen Endanschlag des Stabilisators für den Fall bildet, dass das erste Begrenzungsmittel in eine geöffnete Stellung verbracht ist.

Mit anderen Worten ermöglichen es die beiden Anschläge, eine zwischen den beiden Stabilisatorgliedern auftretende Einfederbewegung in unterschiedlichem Umfang und damit mehrstufig gegenüber einem zugehörigen baulich bedingten und insofern festen Endanschlag des Stabilisators einzuschränken, sodass sich die zulässige Seitwärtsbewegung eines mit dem Stabilisator ausgestatteten Unterlenkers flexibel an unterschiedliche Anwendungen im Feld anpassen lässt. So erfordert zum Beispiel der Betrieb eines Pflugs eine im Allgemeinen höhere seitliche Auslenkbarkeit der Unterlenker als die Verwendung eines Grubbers oder dergleichen.

Bei dem ersten Stabilisatorglied handelt es sich insbesondere um ein im Wesentlichen zylindrisches Stabilisatorgehäuse, in dem das als Federkolben ausgebildete zweite Stabilisatorglied längsbeweglich geführt ist. Eine innerhalb des Stabilisatorgehäuses angeordnete Federungsmechanik drängt den Federkolben und damit das zweite Stabilisatorglied in eine vorgegebene Ruhestellung, um auf diese Weise eine Selbstzentrierung eines mit dem Stabilisator ausgestatteten Unterlenkers zu ermöglichen.

Der so geschaffene Stabilisator kann insbesondere vom sogenannten einfachwirkenden Typ sein. D.h. dieser erlaubt eine stufenweise Begrenzung ausschließlich einer zwischen den beiden Stabilisatorgliedern auftretenden Einfederbewegung, nicht jedoch einer Ausfederbewegung. Um die zulässige Seitwärtsbewegung eines an dem Dreipunktgeräteanbau angebrachten Anbaugeräts in beiden Richtungen einschränken zu können, ist daher jedem der beiden Unterlenker des Dreipunkteräteanbaus ein separater sowie gegensinnig arbeitender Stabilisator zuzuordnen.

Vorteilhafte Ausführungen des erfindungsgemäßen Stabilisators gehen aus den Unteransprüchen hervor.

Vorzugsweise ist das erste Begrenzungsmittel als äußere Sperrklappe und das zweite Begrenzungsmittel als innere Sperrklappe ausgebildet, wobei die beiden Sperrklappen mittels zumindest einer quer zur Längsachse des Stabilisators verlaufenden Drehachse schwenkbar mit dem ersten Stabilisatorglied verbunden sind. Zur stufenweisen Freigabe des Stabilisators ist zunächst die äußere Sperrklappe und danach die innere Sperrklappe jeweils aus einer geschlossenen in eine geöffnete Stellung zu schwenken. Hierbei lässt der durch die innere Sperrklappe gebildete zweite Anschlag eine gegenüber dem durch die äußere Sperrklappe gebildeten ersten Anschlag größere Einfederbewegung zwischen den beiden Stabilisatorgliedern zu.

Die Verwendung des Begriffs der inneren Sperrklappe bedeutet, dass diese räumlich zwischen der äußeren Sperrklappe und dem ersten Stabilisatorglied angeordnet ist bzw. verläuft, sofern sich die äußere Sperrklappe in der geschlossenen Stellung befindet. Dabei kann zwischen den angrenzenden Konturen der vorgenannten Teile zumindest abschnittsweise ein Form- und/oder Kraftschluss hergestellt sein.

Vorzugsweise ist der erste und/oder zweite Anschlag durch eine an der äußeren und/oder inneren Sperrklappe stirnseitig vorgesehene Abflachung gebildet. Die stirnseitig vorgesehene Abflachung stellt einen einseitigen Anschlagbereich für ein an dem zweiten Stabilisatorglied ausgebildetes Gegenlager in Gestalt eines umlaufenden Begrenzungskragens dar. Dabei wird eine zwischen den beiden Stabilisatorgliedern auftretende Einfederbewegung insoweit zugelassen, bis es zum Kontakt zwischen dem Begrenzungskragen und dem jeweiligen einseitigen Anschlagbereich der äußeren bzw. inneren Sperrklappe kommt.

Im Sinne einer kompakten Bauweise des Stabilisators ist es denkbar, dass die beiden Sperrklappen platzsparend um eine gemeinsame Drehachse schwenkbar mit dem ersten Stabilisatorglied verbunden sind. Die Drehachse kann beispielsweise von einem sich durch das erste Stabilisatorglied hindurch erstreckenden Scharnierbolzen gebildet sein, an dessen freien Enden die beiden Sperrklappen zur Herstellung einer schwenkbaren Verbindung mittels zugehöriger äußerer und innerer Scharnierlaschen drehbar gelagert sind.

Insbesondere besteht die Möglichkeit, dass die äußere Sperrklappe in der geschlossenen Stellung sowohl die innere Sperrklappe als auch das erste Stabilisatorglied zumindest teilweise umschließt, woraus sich ein verbesserter Schutz vor Verschmutzungen von außen ergibt. Die äußere Sperrklappe kann zu diesem Zweck die Gestalt einer die innere Sperrklappe sowie das erste Stabilisatorglied in ihrer geschlossenen Stellung abschnittsweise umgreifenden Halbschale aufweisen. Eine ähnliche Ausgestaltung ist auch im Hinblick auf die innere Sperrklappe denkbar, sodass die beiden Sperrklappen in ihrer jeweils geschlossenen Stellung zumindest das erste Stabilisatorglied einschließlich einer darin untergebrachten Federungsmechanik vor dem Eindringen unerwünschter Verschmutzungen von außen schützen.

Die äußere Sperrklappe kann über eine Zuglasche mittels eines Zugseils oder einer Zugkette mit einer heckseitigen Befestigungsstelle des Traktors verbindbar sein, um diese beim Anheben der Unterlenker selbsttätig in die geschlossene Stellung zu verbringen. Dies ist vor allem bei der Durchführung von Transportfahrten von Vorteil, da hier ein unkontrolliertes Hin- und Herschwingen eines an dem Dreipunktgeräteanbau angebrachten Anbaugeräts möglichst unterbunden werden soll.

Des Weiteren kann ein an der inneren Sperrklappe angebrachtes Kopplungselement vorhanden sein, mittels dessen sich die innere Sperrklappe gemeinsam mit der äußeren Sperrklappe aus einer geschlossenen Stellung in eine geöffnete Stellung verbringen lässt. Das Kopplungselement kann beispielsweise die Gestalt eines an der inneren Sperrklappe ausgebildeten Vorsprungs aufweisen, der sich durch eine an einer Oberseite der äußeren Sperrklappe vorgesehene Öffnung erstreckt und durch den ein Sicherungselement in Gestalt eines abnehmbaren Splints gesteckt ist, dessen Abmessungen gegenüber der Öffnung derart größer gewählt sind, dass dieser die innere Sperrklappe beim Anheben der äußeren Sperrklappe in die geöffnete Stellung mitführt.

Bei den beiden Sperrklappen kann es sich jeweils um ein aus Stahl hergestelltes Biege- oder Gussteil handeln. Das Biege- oder Gussteil kann einen verstärkten Anschlagbereich aufweisen, sodass sich erhöhten Belastungen, wie sie im Falle schwerer Anbaugeräte auftreten, entsprechend Rechnung tragen lässt.

Gemäß einer möglichen alternativen Ausgestaltung des Stabilisators ist das zweite Begrenzungsmittel als entlang der Längsachse des Stabilisators verstellbarer Anschlagbolzen zur variablen Begrenzung der Einfederbewegung ausgebildet. Dieser ermöglicht es, die Lage des zweiten Anschlags und damit den zulässigen Umfang einer zwischen den beiden Stabilisatorgliedern auftretenden Einfederbewegung stufenlos in einem durch den ersten Anschlag und den zugehörigen Endanschlag des Stabilisators gegebenen Auslenkungsbereich anzupassen. Bei dem ersten Begrenzungsmittel kann es sich um eine konventionelle Sperrklappe handeln, wobei diese zur Freigabe des Anschlagbolzens und damit des zweiten Anschlags zunächst aus der geschlossenen in die geöffnete Stellung zu verbringen ist.

Der zweite Anschlag kann durch ein freies Ende des Anschlagbolzens gebildet sein. Genauer gesagt kann das freie Ende einen einseitigen Anschlagbereich für ein innerhalb des zweiten Stabilisatorglieds ausgebildetes Gegenlager in Gestalt eines zentralen Stoßbodens darstellen. Eine zwischen den beiden Stabilisatorgliedern auftretende Einfederbewegung wird insoweit zugelassen, bis es zum Kontakt zwischen dem zentralen Stoßboden und dem freien Ende des Anschlagbolzens kommt.

Insbesondere kann der Anschlagbolzen als Gewindebolzen ausgebildet sein. Der Gewindebolzen umfasst einen Gewindeabschnitt mit einem Außengewinde, das in ein entlang der Längsachse des zweiten Stabilisatorglieds vorgesehenes komplementäres Innengewinde eingreift, wobei sich die Lage des freien Endes durch Hinein- oder Herausdrehen des Gewindebolzens verändern lässt. Zu diesem Zweck kann der Gewindebolzen an seinem entgegengesetzten Ende eine Werkzeugaufnahme in Gestalt eines Inbusantriebs oder dergleichen aufweisen.

Ferner kann dem Gewindebolzen ein die Verstellbarkeit begrenzender Verlierschutz zugeordnet sein. Im einfachsten Fall handelt es sich bei dem Verlierschutz um eine quer zur Verstellrichtung des Gewindebolzens verlaufende Madenschraube, mittels derer ein übermäßiges Herausschrauben des Gewindebolzens aus dem Innengewinde des zweiten Stabilisatorglieds verhindert wird.

Denkbar ist es auch, dass der Anschlagbolzen verschieblich innerhalb einer entlang der Längsachse des zweiten Stabilisatorglieds ausgebildeten Führungsbohrung gelagert ist. Der zur Verstellung des Anschlagbolzens vorgesehene Gewindeabschnitt kann in diesem Fall an einem den Anschlagbolzen beaufschlagenden separaten Gewindebolzen ausgebildet sein.

Um ein unbeabsichtigtes Verstellen des Anschlagbolzens aufgrund betriebsbedingt auftretender Vibrationen oder dergleichen zu unterbinden, besteht die Möglichkeit, dass dem Anschlagbolzen ein verschiebungshemmendes Arretierungselement zugeordnet ist. Dieses ist beispielsweise als ein in eine Umfangsnut des Anschlagbolzens eingebrachter gummielastischer O-Ring ausgebildet, der innerhalb der Führungsbohrung des Anschlagbolzens derart vorkomprimiert wird, dass dieser aufgrund der dadurch hervorgerufenen Reibungskräfte ein Verschieben des Anschlagbolzens innerhalb der Führungsbohrung erschwert.

Gemäß einer möglichen weiteren alternativen Ausgestaltung des Stabilisators handelt es sich bei dem zweiten Begrenzungsmittel um einen zwischen den beiden Stabilisatorgliedern angeordneten Zwischenring. Der zweite Anschlag kann in diesem Fall durch eine an dem Zwischenring stirnseitig vorgesehene Abflachung gebildet sein. Diese stellt einen einseitigen Anschlagbereich für ein an dem zweiten Stabilisatorglied ausgebildetes Gegenlager in Gestalt eines umlaufenden Begrenzungskragens dar. Eine zwischen den beiden Stabilisatorgliedern auftretende Einfederbewegung wird insoweit zugelassen, bis es zum Kontakt zwischen dem Begrenzungskragen und der stirnseitig vorgesehenen Abflachung kommt. D.h. je nach Dicke des verwendeten Zwischenrings lässt sich eine zwischen den beiden Stabilisatorgliedern auftretende Einfederbewegung in unterschiedlichem Umfang beschränken. Bei dem ersten Begrenzungsmittel kann es sich um eine konventionelle Sperrklappe handeln, wobei diese zur Freigabe des Zwischenrings und damit des zweiten Anschlags zunächst aus der geschlossenen in die geöffnete Stellung zu verbringen ist.

Zur leichteren Montage bzw. Demontage kann der Zwischenring zumindest zweigeteilt aufgebaut sein. Ein Montageelement in Gestalt eines federgesicherten Splints oder einer Verschraubung dient hierbei der lösbaren Verbindung der zumindest beiden Teile an dem ersten Stabilisatorglied.

Ferner ist es denkbar, dass der Zwischenring ein Innengewinde aufweist, das auf ein in einem Endbereich des ersten Stabilisatorglieds ausgebildetes Außengewinde aufschraubbar ist, sodass sich die Lage des zweiten Anschlags durch entsprechendes Auf- oder Abschrauben des Zwischenrings stufenlos anpassen lässt. Auch hier kann der Zwischenring zweigeteilt aufgebaut sein, wobei sich dieser mittels des Montageelements mit dem Außengewinde des ersten Stabilisatorglieds derart verspannen lässt, dass dieser gegen ein unbeabsichtigtes Verdrehen gesichert wird.

Abschließend sei angemerkt, dass die Verwendung des vorstehend beschriebenen Zwischenrings grundsätzlich auch in Verbindung mit einem hydraulischen Stabilisator vorstellbar ist, sodass sich eine an diesem auftretende Einfederbewegung in entsprechender Weise einschränken lässt.

Der erfindungsgemäße Stabilisator in seinen unterschiedlichen Ausgestaltungen wird im Folgenden anhand der beigefügten Zeichnungen näher erläutert. Hinsichtlich ihrer Funktion übereinstimmende bzw. vergleichbare Komponenten sind mit identischen Bezugszeichen gekennzeichnet. Es zeigen:
- Fig. 1: eine perspektivische Ansicht eines Ausführungsbeispiels des erfindungsgemäßen Stabilisators für einen Unterlenker eines Dreipunktgeräteanbaus eines Traktors,
- Fig. 2: eine erste Schnittdarstellung des in Fig. 1 wiedergegebenen Ausführungsbeispiels des erfindungsgemäßen Stabilisators,
- Fig. 3: eine zweite Schnittdarstellung des in Fig. 1 wiedergegebenen Ausführungsbeispiels des erfindungsgemäßen Stabilisators,
- Fig. 4: eine dritte Schnittdarstellung des in Fig. 1 wiedergegebenen Ausführungsbeispiels des erfindungsgemäßen Stabilisators,
- Fig. 5: eine erste Schnittdarstellung eines alternativen Ausführungsbeispiels des erfindungsgemäßen Stabilisators für einen Unterlenker eines Dreipunktgeräteanbaus eines Traktors,
- Fig. 6: eine zweite Schnittdarstellung des in Fig. 5 wiedergegebenen Ausführungsbeispiels des erfindungsgemäßen Stabilisators,
- Fig. 7: eine perspektivische Ansicht eines weiteren alternativen Ausführungsbeispiels des erfindungsgemäßen Stabilisators für einen Unterlenker eines Dreipunktgeräteanbaus eines Traktors,
- Fig. 8: eine erste Schnittdarstellung des in Fig. 7 wiedergegebenen Ausführungsbeispiels des erfindungsgemäßen Stabilisators,
- Fig. 9: eine zweite Schnittdarstellung des in Fig. 7 wiedergegebenen Ausführungsbeispiels des erfindungsgemäßen Stabilisators, und
- Fig. 10: eine perspektivische Ansicht eines Federkolbens zur Verwendung in einem der in Fig. 1 bis 9 wiedergegebenen Ausführungsbeispiele des erfindungsgemäßen Stabilisators.

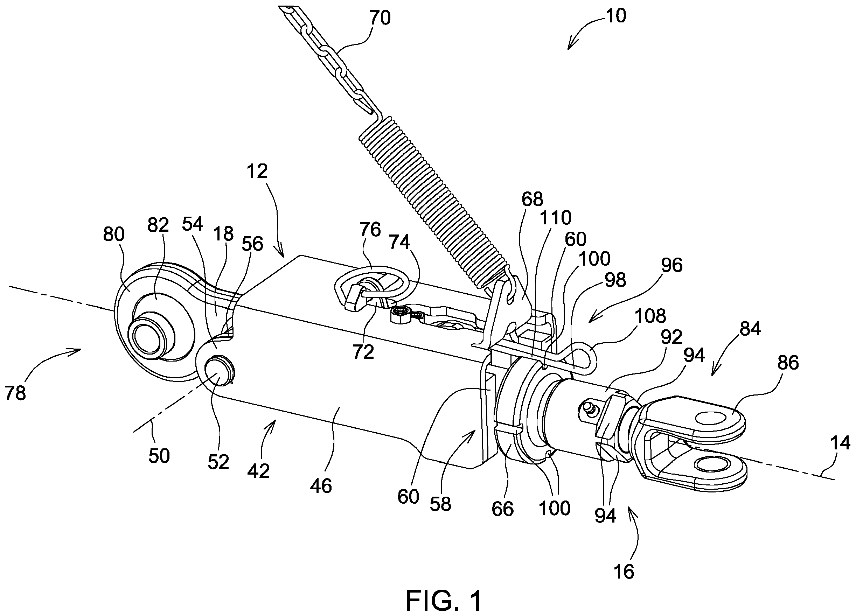

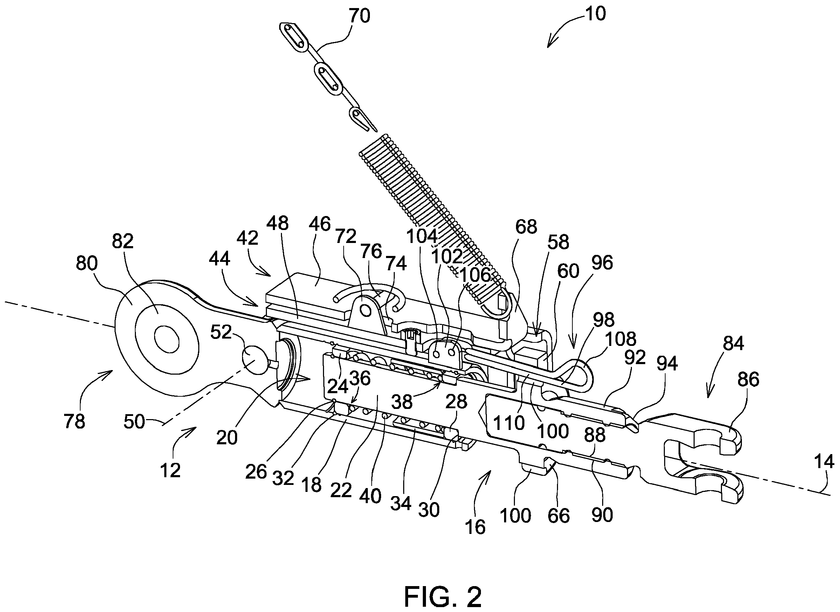

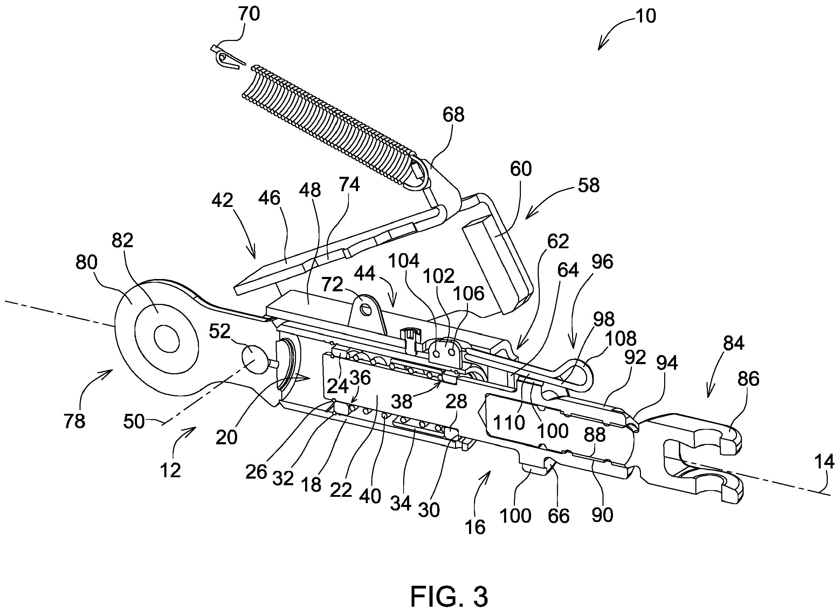

Fig. 1 zeigt eine perspektivische Ansicht eines Ausführungsbeispiels des erfindungsgemäßen Stabilisators für einen nicht wiedergegebenen Unterlenker eines Dreipunktgeräteanbaus eines Traktors, wobei bezüglich konstruktiver Einzelheiten auf die Schnittdarstellungen gemäß der Fig. 2 bis 4 verwiesen sei.

Der Stabilisator 10 umfasst ein erstes Stabilisatorglied 12 und ein gegenüber dem ersten Stabilisatorglied 12 entlang einer gemeinsamen Längsachse 14 federbeweglich gelagertes zweites Stabilisatorglied 16. Bei dem ersten Stabilisatorglied 12 handelt es sich um ein im Wesentlichen zylindrisches Stabilisatorgehäuse 18, innerhalb dessen das als Federkolben 20 ausgebildete zweite Stabilisatorglied 16 längsbeweglich geführt ist, wobei der Federkolben 20 Bestandteil einer nachfolgend mit Bezugnahme auf die Fig. 2 bis 4 beschriebenen Federmechanik ist.

Der Federkolben 20 weist einen Kolbenabschnitt 22 mit reduziertem Durchmesser auf, an dem ein erster Anschlagring 24 in einem ersten Endbereich gleitend angebracht ist. Der erste Anschlagring 24 ist mittels eines Federrings 26, der in eine an dem Kolbenabschnitt 22 umfangsmäßig ausgebildete Nut eingreift, gesichert. Des Weiteren ist ein zweiter Anschlagring 28 in einem zweiten Endbereich gleitend angebracht. Der zweite Anschlagring 28 stützt sich an einem an dem Federkolben 20 ausgebildeten Kragen 30 ab. Ein in das Stabilisatorgehäuse 18 eingebrachter Sprengring 32 sowie ein Abstandshalter 34 dienen gemeinsam mit dem ersten und zweiten Anschlagring 24 und 28 der Begrenzung einer an dem Federkolben 20 auftretenden Ein- und Ausfederbewegung, bilden mithin zugehörige baulich bedingte und insofern feste Endanschläge 36 und 38 des Stabilisators 10. Zwischen den beiden Anschlagringen 24 und 28 erstreckt sich eine den Kolbenabschnitt 22 umgebende Schraubenfeder 40. Die Schraubenfeder 40 wird mittels der beiden Anschlagringe 24 und 28 derart komprimiert bzw. vorgespannt, dass der Federkolben 20 und damit das zweite Stabilisatorglied 16 in eine vorgegebene Ruhestellung gedrängt wird, um auf diese Weise eine Selbstzentrierung eines mit dem Stabilisator 10 ausgestatteten Unterlenkers zu ermöglichen.

Es sei angemerkt, dass die Darstellung des ersten Stabilisatorglieds 12 als im Wesentlichen zylindrisches Stabilisatorgehäuse 18 lediglich beispielhaften Charakter hat. Vielmehr ist auch eine Vielzahl anderer Gehäuseformen denkbar.

Des Weiteren ist ein mit dem ersten Stabilisatorglied 12 verbundenes erstes Begrenzungsmittel 42 sowie zwischen den beiden Stabilisatorgliedern 12 und 16 ein zweites Begrenzungsmittel 44 vorgesehen. Beispielsgemäß ist das erste Begrenzungsmittel 42 als äußere Sperrklappe 46 und das zweite Begrenzungsmittel 44 als innere Sperrklappe 48 ausgebildet, wobei letztere räumlich zwischen der äußeren Sperrklappe 46 und dem ersten Stabilisatorglied 12 angeordnet ist bzw. verläuft, sofern sich die äußere Sperrklappe 46 und damit die innere Sperrklappe 48 jeweils in einer in den Fig. 1 und 2 gezeigten geschlossenen Stellung befinden. Wie sich am besten der Schnittdarstellung des Stabilisators 10 in Fig. 2 entnehmen lässt, ist dabei zwischen den Konturen der vorgenannten Teile 12, 42 und 44 zumindest abschnittsweise ein Form- und/oder Kraftschluss hergestellt.

Die beiden Sperrklappen 46 und 48 sind mittels einer quer zur Längsachse 14 des Stabilisators 10 verlaufenden gemeinsamen Drehachse 50 schwenkbar mit dem ersten Stabilisatorglied 12 verbunden. Die Drehachse 50 ist von einem sich durch das erste Stabilisatorglied 12 hindurch erstreckenden Scharnierbolzen 52 gebildet, an dessen freien Enden die beiden Sperrklappen 46 und 48 mittels zugehöriger äußerer und innerer Scharnierlaschen 54 und 56 drehbar gelagert sind.

Beispielsgemäß ist ein erster Anschlag 58 durch eine an der äußeren Sperrklappe 46 stirnseitig vorgesehene erste Abflachung 60 und ein zweiter Anschlag 62 durch eine an der inneren Sperrklappe 48 stirnseitig vorgesehene zweite Abflachung 64 gebildet. Die stirnseitig vorgesehene erste bzw. zweite Abflachung 60 bzw. 64 stellt einen jeweiligen einseitigen Anschlagbereich für ein an dem zweiten Stabilisatorglied 16 ausgebildetes Gegenlager in Gestalt eines umlaufenden Begrenzungskragens 66 dar. Eine zwischen den beiden Stabilisatorgliedern 12 und 16 auftretende Einfederbewegung wird insoweit zugelassen, bis es zum Kontakt zwischen dem Begrenzungskragen 66 und dem jeweiligen einseitigen Anschlagbereich der äußeren bzw. inneren Sperrklappe 46 bzw. 48 kommt.

Zur stufenweisen Freigabe des Stabilisators 10 ist zunächst die äußere Sperrklappe 46 und danach die innere Sperrklappe 48 jeweils aus ihrer geschlossenen in eine geöffnete Stellung zu schwenken. Diese Abfolge ist in den Fig. 2 bis 4 gezeigt, wobei zu erkennen ist, dass der durch die innere Sperrklappe 48 gebildete zweite Anschlag 62 eine gegenüber dem durch die äußere Sperrklappe 46 gebildeten ersten Anschlag 58 größere Einfederbewegung zwischen den beiden Stabilisatorgliedern 12 und 16 zulässt.

Allgemein gesprochen bildet das erste Begrenzungsmittel 42 in seiner geschlossenen Stellung einen mit dem zweiten Stabilisatorglied 16 zusammenwirkenden ersten Anschlag 58 zur Begrenzung einer zwischen den beiden Stabilisatorgliedern 12 und 16 auftretenden Einfederbewegung, wobei das zwischen den beiden Stabilisatorgliedern 12 und 16 vorgesehene zweite Begrenzungsmittel 44 einen zweiten Anschlag 62 zur Begrenzung der Einfederbewegung gegenüber dem zugehörigen Endanschlag 36 des Stabilisators 10 für den Fall bildet, dass das erste Begrenzungsmittel 42 in seine geöffnete Stellung verbracht ist.

Entsprechend der Darstellungen in den Fig. 1 und 2 umschließt die äußere Sperrklappe 46 in der geschlossenen Stellung sowohl die innere Sperrklappe 48 als auch das erste Stabilisatorglied 12 zumindest teilweise. Die äußere Sperrklappe 46 weist zu diesem Zweck die Gestalt einer die innere Sperrklappe 48 sowie das erste Stabilisatorglied 12 in ihrer geschlossenen Stellung abschnittsweise umgreifenden Halbschale auf. Eine ähnliche Ausgestaltung ist auch im Hinblick auf die innere Sperrklappe 48 vorgesehen, sodass die beiden Sperrklappen 46 und 48 in ihrer jeweils geschlossenen Stellung zumindest das erste Stabilisatorglied 12 einschließlich der darin untergebrachten Federungsmechanik vor dem Eindringen unerwünschter Verschmutzungen von außen schützen.

Die äußere Sperrklappe 46 lässt sich über eine Zuglasche 68 mittels einer Zugkette 70 mit einer heckseitigen Befestigungsstelle des Traktors verbinden, um diese beim Anheben der Unterlenker selbsttätig in die geschlossene Stellung zu verbringen. Dies ist vor allem bei der Durchführung von Transportfahrten von Vorteil, da hier ein unkontrolliertes Hin- und Herschwingen eines an dem Dreipunktgeräteanbau angebrachten Anbaugeräts möglichst unterbunden werden soll.

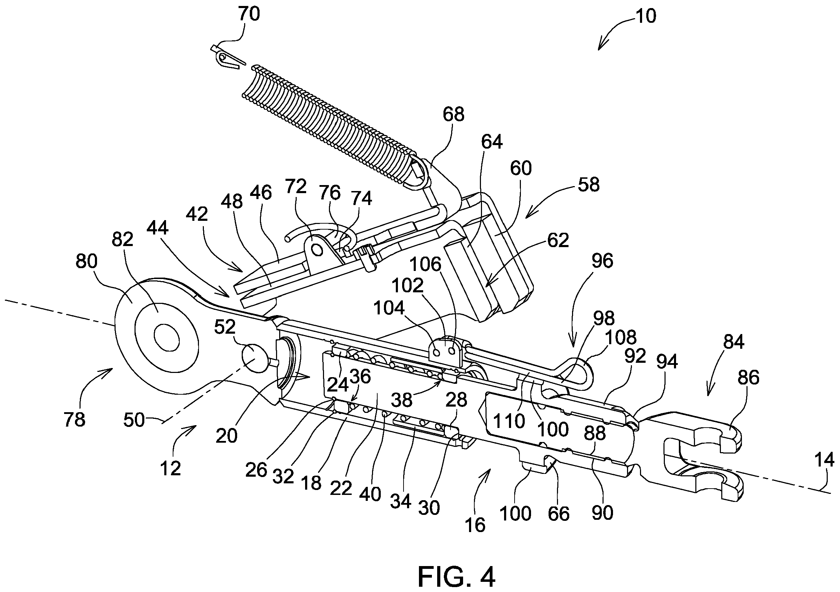

Des Weiteren ist ein an der inneren Sperrklappe 48 angebrachtes Kopplungselement 72 vorhanden, mittels dessen sich die innere Sperrklappe 48 gemeinsam mit der äußeren Sperrklappe 46 aus der geschlossenen Stellung in die geöffnete Stellung verbringen lässt. Das Kopplungselement 72 weist die Gestalt eines an der inneren Sperrklappe 48 ausgebildeten Vorsprungs auf, der sich durch eine an einer Oberseite der äußeren Sperrklappe 46 vorgesehene Öffnung 74 erstreckt und durch den ein in den Fig. 2 und 4 wiedergegebenes Sicherungselement 76 in Gestalt eines abnehmbaren Splints gesteckt ist, dessen Abmessungen gegenüber der Öffnung 74 derart größer gewählt sind, dass dieser die innere Sperrklappe 48 beim Anheben der äußeren Sperrklappe 46 in die geöffnete Stellung mitführt.

Bei den beiden Sperrklappen 46 und 48 handelt es sich jeweils um ein aus Stahlblech hergestelltes Biegeteil, das einen verstärkten Anschlagbereich für den Begrenzungskragen 66 aufweist.

Der so geschaffene Stabilisator 10 ist vom sogenannten einfachwirkenden Typ. D.h. dieser erlaubt eine stufenweise Begrenzung ausschließlich einer zwischen den beiden Stabilisatorgliedern 12 und 16 auftretenden Einfederbewegung, nicht jedoch einer Ausfederbewegung. Um die zulässige Seitwärtsbewegung eines an dem Dreipunktgeräteanbau angebrachten Anbaugeräts in beiden Richtungen einschränken zu können, ist daher jedem der beiden Unterlenker des Dreipunkteräteanbaus ein separater sowie gegensinnig arbeitender Stabilisator 10 zuzuordnen.

Zur Herstellung einer traktorseitigen Gelenkverbindung umfasst das erste Stabilisatorglied 12 ein Kugelauge 78. Das Kugelauge 78 besteht aus einer in einem Endbereich des ersten Stabilisatorglieds 12 ausgeformten Befestigungsöse 80 sowie einer darin drehbar gelagerten Befestigungskugel 82, die eine räumliche Bewegung des Stabilisators 10 gegenüber einer heckseitigen Befestigungsstelle des Traktors erlaubt.

Weiterhin umfasst das zweite Stabilisatorglied 16 einen Befestigungsschenkel 84 zur Herstellung einer Gelenkverbindung mit einem der beiden Unterlenker des Dreipunktgeräteanbaus, wobei der Befestigungsschenkel 84 eine an dem Unterlenker anbringbare Befestigungsgabel 86 aufweist.

Beispielsgemäß ist das zweite Stabilisatorglied 16 gegenüber dem ersten Stabilisatorglied 12 in Bezug auf die gemeinsame Längsachse 14 drehbar gelagert, wobei ein innerhalb des zweiten Stabilisatorglieds 16 ausgebildetes Innengewinde 88 an einem an dem Befestigungsschenkel 84 ausgebildeten Außengewinde 90 derart eingreift, dass der Stabilisator 10 durch Drehung des zweiten Stabilisatorglieds 16 gegenüber dem ersten Stabilisatorglied 12 bezüglich seiner Gesamtlänge verstellbar ist.

Zur manuellen Drehbetätigung des zweiten Stabilisatorglieds 16 weist dieses einen Griffbereich 92 auf. Der mit einer zusätzlichen Werkzeugaufnahme 94 versehene Griffbereich 92 ist drehfest mit dem zweiten Stabilisatorglied 16 verbunden.

Der Begrenzungskragen 66 und der Griffbereich 92 sind einstückiger Bestandteil des zweiten Stabilisatorglieds 16. Bei dem zweiten Stabilisatorglied 16 handelt es sich - ebenso wie auch bei dem ersten Stabilisatorglied 12 - um ein aus einer geeigneten Stahllegierung gefertigtes Guss- oder Schmiedeteil, das zur Herstellung präziser Passungen entsprechend nachbearbeitet wird.

Um einer unbeabsichtigten Verstellung der Gesamtlänge des Stabilisators 10 vorzubeugen, ist eine Drehung des zweiten Stabilisatorglieds 16 gegenüber dem ersten Stabilisatorglied 12 mittels eines Verriegelungselements 96 arretierbar.

Das Verriegelungselement 96 umfasst einen Federbügel 98, der in eine am Umfang des Begrenzungskragens 66 vorgesehene Ausnehmung 100 eingreift bzw. gepresst wird. Der Federbügel 98 lässt sich entgegen einer rückstellenden Federkraft von Hand aus der Ausnehmung 100 herausschwenken, sodass eine Drehung des Begrenzungskragens 66 freigegeben wird. Eine am ersten Stabilisatorglied 12 angeordnete Befestigungslasche 102 dient der Halterung des Federbügels 98. Die Befestigungslasche 102 weist zwei in Längsrichtung des Stabilisators 10 beabstandete Querbohrungen 104 und 106 auf, wobei jede der beiden Querbohrungen 104 und 106 ein offenes Ende des Federbügels 98 aufnimmt. Die Sperrklappen 46 und 48 sind im Bereich des Federbügels 98 derart ausgespart, dass ein Herausschwenken des Federbügels 98 auch dann möglich ist, wenn sich die Sperrklappen 46 und 48 in der geschlossenen Stellung befinden.

Zur Erleichterung einer manuellen Betätigung des Federbügels 98 umfasst dieser an seinem freien Ende einen ösenförmig aufgeweiteten Griffbereich 108. Die rückstellende Federkraft ist derart bemessen, dass einerseits eine zuverlässige Arretierung des drehbaren Begrenzungskragens 66 gewährleistet wird, andererseits eine werkzeuglose Betätigung des Federbügels 98 möglich bleibt. Der Federbügel 98 ist aus einem rostfreien oder in entsprechender Weise oberflächenbehandelten Runddraht gefertigt.

Die Ausnehmung 100 weist die Gestalt einer schlitzförmigen Vertiefung auf, die in Richtung einer zwischen dem ersten Stabilisatorglied 12 und dem zweiten Stabilisatorglied 16 auftretenden Federbewegung orientiert ist. Die schlitzförmige Vertiefung ist derart ausgebildet, dass diese ein an dem Federbügel 98 vorgesehenes Eingriffssegment 110 vollständig aufnimmt. Da der Federbügel 98 entlang der schlitzförmigen Vertiefung zu gleiten vermag, wird eine zwischen den beiden Stabilisatorgliedern 12 und 16 auftretende Federbewegung nicht behindert.

Vorliegend ist eine Vielzahl von Ausnehmungen 100 entlang des Umfangs des Begrenzungskragens 66 gleichmäßig verteilt angeordnet, sodass sich die Gesamtlänge des Stabilisators 10 stufenweise verstellen und arretieren lässt.

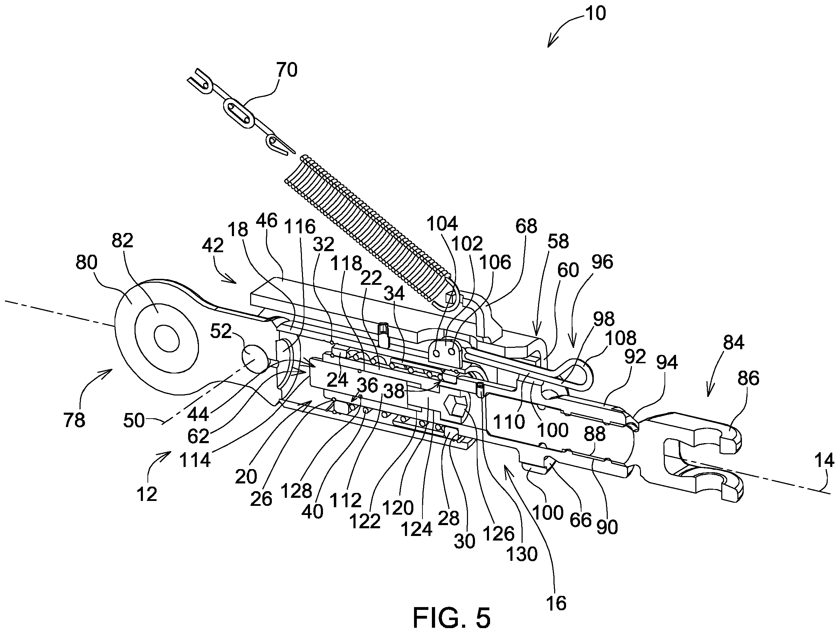

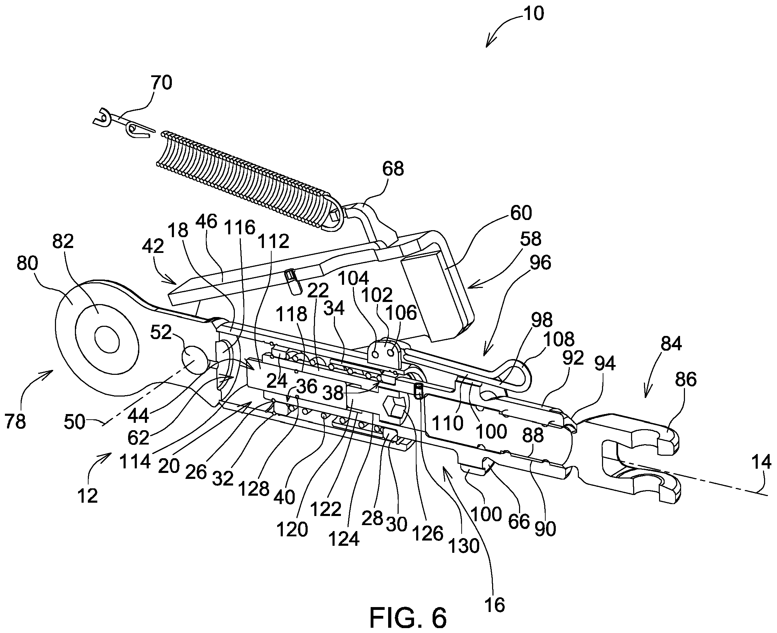

In den Fig. 5 und 6 ist jeweils in Schnittdarstellung ein alternatives Ausführungsbeispiel des erfindungsgemäßen Stabilisators für einen Unterlenker eines Dreipunktgeräteanbaus eines Traktors gezeigt.

Dieses unterscheidet sich von dem vorhergehend beschriebenen Ausführungsbeispiel dahingehend, dass das zweite Begrenzungsmittel 44 als entlang der Längsachse 14 des Stabilisators 10 verstellbarer Anschlagbolzen 112 zur variablen Begrenzung der Einfederbewegung ausgebildet ist. Dieser ermöglicht es, die Lage des zweiten Anschlags 62 und damit den zulässigen Umfang einer zwischen den beiden Stabilisatorgliedern 12 und 16 auftretenden Einfederbewegung stufenlos in einem durch den ersten Anschlag 58 und den zugehörigen Endanschlag 36 des Stabilisators 10 gegebenen Auslenkungsbereich anzupassen. Bei dem ersten Begrenzungsmittel 42 handelt es sich um eine konventionelle Sperrklappe 46, wobei diese entsprechend der in den Fig. 5 und 6 dargestellten Abfolge zur Freigabe des Anschlagbolzens 112 und damit des zweiten Anschlags 62 zunächst aus der geschlossenen in die geöffnete Stellung zu verbringen ist.

Der zweite Anschlag 62 ist durch ein freies Ende 114 des Anschlagbolzens 112 gebildet. Genauer gesagt stellt das freie Ende 110 einen einseitigen Anschlagbereich für ein innerhalb des zweiten Stabilisatorglieds 16 ausgebildetes Gegenlager in Gestalt eines zentralen Stoßbodens 116 dar. Eine zwischen den beiden Stabilisatorgliedern 12 und 16 auftretende Einfederbewegung wird insoweit zugelassen, bis es zum Kontakt zwischen dem zentralen Stoßboden 116 und dem freien Ende 110 des Anschlagbolzens 112 kommt.

Beispielsgemäß ist der Anschlagbolzen 112 verschieblich innerhalb einer entlang der Längsachse 14 des zweiten Stabilisatorglieds 16 ausgebildeten Führungsbohrung 118 gelagert, wobei ein den Anschlagbolzen 112 beaufschlagender Gewindebolzen 120 vorgesehen ist, der zur Verstellung des Anschlagbolzens 112 einen Gewindeabschnitt mit einem Außengewinde 122 umfasst, das in ein entlang der Längsachse 14 des zweiten Stabilisatorglieds 16 vorgesehenes komplementäres Innengewinde 124 eingreift, sodass sich die Lage des freien Endes 110 durch Hinein- oder Herausdrehen des Gewindebolzens 120 verändern lässt. Zu diesem Zweck weist der Gewindebolzen 120 an seinem entgegengesetzten Ende eine Werkzeugaufnahme 126 in Gestalt eines Inbusantriebs auf.

Um ein unbeabsichtigtes Verstellen des Anschlagbolzens 112 aufgrund betriebsbedingt auftretender Vibrationen oder dergleichen zu unterbinden, ist dem Anschlagbolzen 112 ein verschiebungshemmendes Arretierungselement 128 zugeordnet. Das Arretierungselement 128 ist als ein in eine Umfangsnut des Anschlagbolzens 112 eingebrachter gummielastischer O-Ring ausgebildet, der innerhalb der Führungsbohrung 118 des Anschlagbolzens 112 derart vorkomprimiert wird, dass dieser aufgrund der dadurch hervorgerufenen Reibungskräfte ein Verschieben des Anschlagbolzens 112 innerhalb der Führungsbohrung 118 erschwert.

Ferner ist dem Gewindebolzen 120 ein die Verstellbarkeit begrenzenden Verlierschutz 130 zugeordnet. Im vorliegenden Fall handelt es sich bei dem Verlierschutz 130 um eine quer zur Verstellrichtung des Gewindebolzens 120 verlaufende Madenschraube, mittels derer ein übermäßiges Herausschrauben des Gewindebolzens 120 aus dem Innengewinde 124 des zweiten Stabilisatorglieds 16 verhindert wird.

Entsprechend einer nicht dargestellten alternativen Ausgestaltung kann der Anschlagbolzen 112 selbst als Gewindebolzen ausgebildet sein. In diesem Fall entfällt das Erfordernis eines separaten Anschlagbolzens.

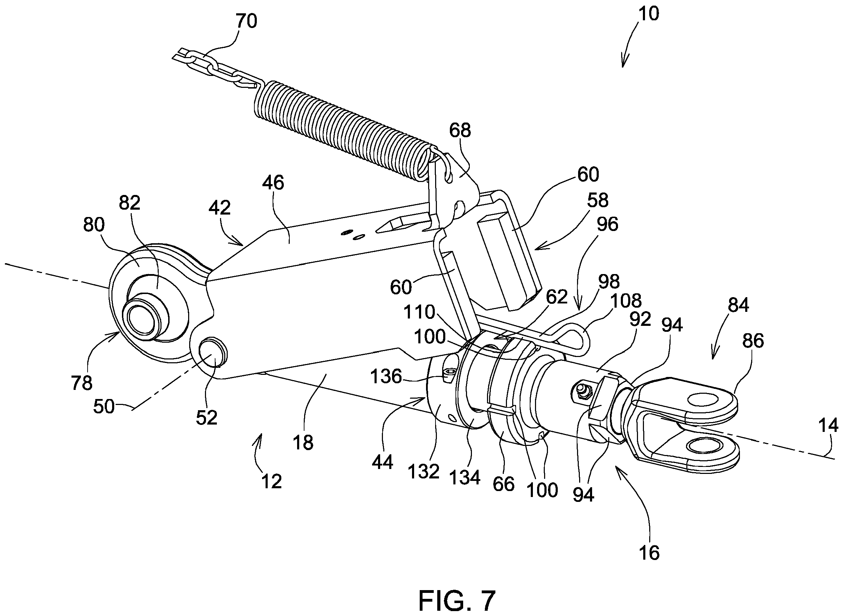

In den Fig. 7 bis 9 ist jeweils in Schnittdarstellung ein weiteres alternatives Ausführungsbeispiel des erfindungsgemäßen Stabilisators für einen Unterlenker eines Dreipunktgeräteanbaus eines Traktors gezeigt.

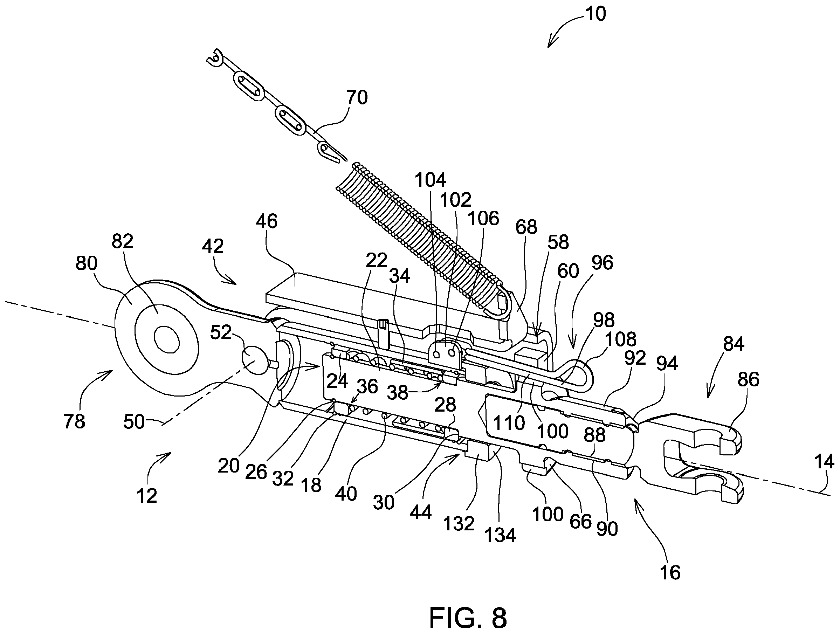

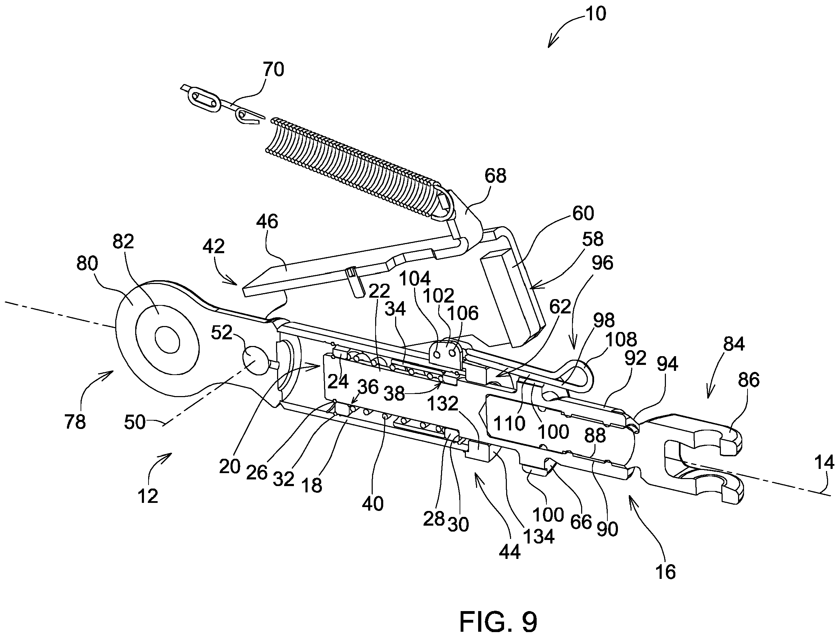

Dieses unterscheidet sich von den vorhergehenden Ausführungsbeispielen dahingehend, dass es sich bei dem zweiten Begrenzungsmittel 44 um einen zwischen den beiden Stabilisatorgliedern 12 und 16 angeordneten Zwischenring 132 handelt. Der zweite Anschlag 62 ist in diesem Fall durch eine an dem Zwischenring 132 stirnseitig vorgesehene Abflachung 134 gebildet. Diese stellt einen einseitigen Anschlagbereich für ein an dem zweiten Stabilisatorglied 16 ausgebildetes Gegenlager in Gestalt eines umlaufenden Begrenzungskragens 66 dar. Eine zwischen den beiden Stabilisatorgliedern 12 und 16 auftretende Einfederbewegung wird insoweit zugelassen, bis es zum Kontakt zwischen dem Begrenzungskragen 66 und der stirnseitig vorgesehenen Abflachung 134 kommt. D.h. je nach Dicke des verwendeten Zwischenrings 132 lässt sich eine zwischen den beiden Stabilisatorgliedern 12 und 16 auftretende Einfederbewegung in unterschiedlichem Umfang beschränken. Bei dem ersten Begrenzungsmittel 42 handelt es sich um eine konventionelle Sperrklappe 46, wobei diese entsprechend der in den Fig. 8 und 9 dargestellten Abfolge zur Freigabe des Zwischenrings 132 und damit des zweiten Anschlags 62 zunächst aus der geschlossenen in die geöffnete Stellung zu verbringen ist.

Zur leichteren Montage bzw. Demontage ist der Zwischenring 132 zweigeteilt aufgebaut. Ein Montageelement 136 in Gestalt einer Verschraubung dient hierbei der lösbaren Verbindung der zumindest beiden Teile an dem ersten Stabilisatorglied 12.

Optional weist der Zwischenring 132 ein Innengewinde auf, das auf ein in einem Endbereich des ersten Stabilisatorglieds 12 ausgebildetes Außengewinde aufschraubbar ist, sodass sich die Lage des zweiten Anschlags 62 durch entsprechendes Auf- oder Abschrauben des Zwischenrings 132 stufenlos anpassen lässt. Aufgrund des zweigeteilten Aufbaus des Zwischenrings 132 lässt sich dieser mittels des Montageelements 136 mit dem Außengewinde des ersten Stabilisatorglieds 12 derart verspannen, dass dieser gegen ein unbeabsichtigtes Verdrehen gesichert wird.

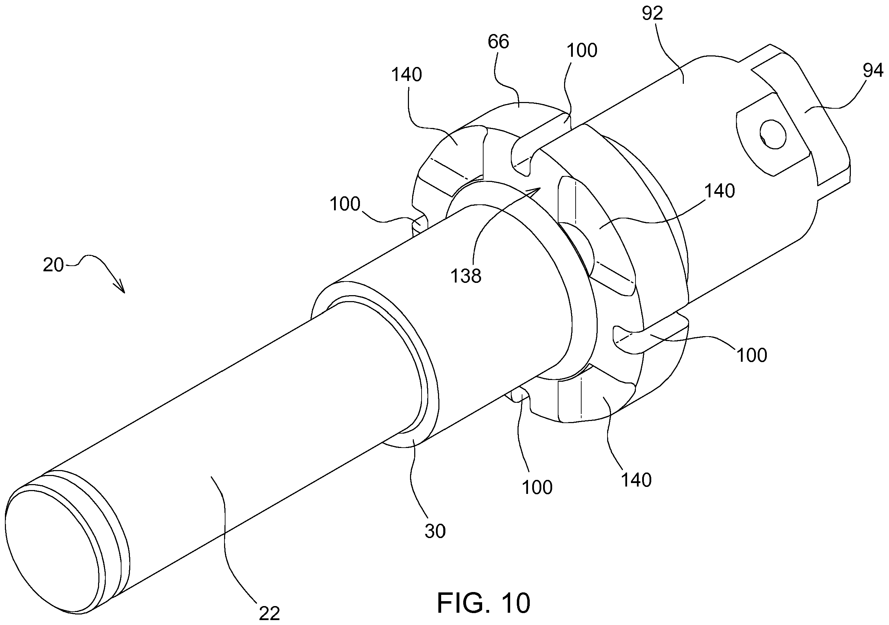

Gemäß einer in Fig. 10 dargestellten Ausgestaltung des Federkolbens 20 weist der Begrenzungskragen 66 entlang eines der inneren bzw. äußeren Sperrklappe 46 bzw. 48 zugewandten Kontaktbereichs 138 eine Vielzahl gleichmäßig verteilt angeordneter Ausnehmungen 140 auf. Die Ausnehmungen 140 sind derart geformt, dass ein spitzwinkliges Aufsitzen der inneren bzw. äußeren Sperrklappe 46 bzw. 48 beim Schließen und damit eine unerwünschte punktuelle Krafteinwirkung auf den Begrenzungskragen 66 vermieden wird.

## Patentansprüche

1. Stabilisator für einen Unterlenker eines Dreipunktgeräteanbaus eines Traktors, mit einem ersten Stabilisatorglied (12) und einem gegenüber dem ersten Stabilisatorglied (12) entlang einer gemeinsamen Längsachse (14) federbeweglich gelagerten zweiten Stabilisatorglied (16), wobei ein mit dem ersten Stabilisatorglied (12) verbundenes erstes Begrenzungsmittel (42) vorgesehen ist, das in einer geschlossenen Stellung einen mit dem zweiten Stabilisatorglied (16) zusammenwirkenden ersten Anschlag (58) zur Begrenzung einer zwischen den beiden Stabilisatorgliedern (12, 16) auftretenden Einfederbewegung bildet, **dadurch gekennzeichnet, dass** zwischen den beiden Stabilisatorgliedern (12, 16) ein zweites Begrenzungsmittel (44) vorgesehen ist, das einen zweiten Anschlag (62) zur Begrenzung der Einfederbewegung gegenüber einem zugehörigen festen Endanschlag (36) des Stabilisators (10) für den Fall bildet, dass das erste Begrenzungsmittel (42) in eine geöffnete Stellung verbracht ist.

2. Stabilisator nach Anspruch 1, **dadurch gekennzeichnet, dass** das erste Begrenzungsmittel (42) als äußere Sperrklappe (46) und das zweite Begrenzungsmittel (44) als innere Sperrklappe (48) ausgebildet ist, wobei die beiden Sperrklappen (46, 48) mittels zumindest einer quer zur Längsachse (14) des Stabilisators (10) verlaufenden Drehachse (50) schwenkbar mit dem ersten Stabilisatorglied (12) verbunden sind.

3. Stabilisator nach Anspruch 2, **dadurch gekennzeichnet, dass** der erste und/oder zweite Anschlag (58, 62) durch eine an der äußeren und/oder inneren Sperrklappe (46, 48) stirnseitig vorgesehene Abflachung (60, 64) gebildet ist.

4. Stabilisator nach Anspruch 2 oder 3, **dadurch gekennzeichnet, dass** die beiden Sperrklappen (46, 48) um eine gemeinsame Drehachse (50) schwenkbar mit dem ersten Stabilisatorglied (12) verbunden sind.

5. Stabilisator nach einem der Ansprüche 2 bis 4, **dadurch gekennzeichnet, dass** die äußere Sperrklappe (46) in der geschlossenen Stellung sowohl die innere Sperrklappe (48) als auch das erste Stabilisatorglied (12) zumindest teilweise umschließt.

6. Stabilisator nach einem der Ansprüche 2 bis 5, **dadurch gekennzeichnet, dass** die äußere Sperrklappe (46) über eine Zuglasche (68) mittels eines Zugseils oder einer Zugkette (70) mit einer heckseitigen Befestigungsstelle des Traktors verbindbar ist.

7. Stabilisator nach einem der Ansprüche 2 bis 6, **dadurch gekennzeichnet, dass** ein an der inneren Sperrklappe (48) angebrachtes Kopplungselement (72) vorhanden sein, mittels dessen sich die innere Sperrklappe (48) gemeinsam mit der äußeren Sperrklappe (46) aus einer geschlossenen Stellung in eine geöffnete Stellung verbringen lässt.

8. Stabilisator nach einem der Ansprüche 2 bis 7, **dadurch gekennzeichnet, dass** es sich bei den beiden Sperrklappen (46, 48) jeweils um ein aus Stahlblech hergestelltes Biegeteil handelt.

9. Stabilisator nach Anspruch 1, **dadurch gekennzeichnet, dass** das zweite Begrenzungsmittel (44) als entlang der Längsachse (14) des Stabilisators (10) verstellbarer Anschlagbolzen (112) zur variablen Begrenzung der Einfederbewegung ausgebildet ist.

10. Stabilisator nach Anspruch 9, **dadurch gekennzeichnet, dass** der zweite Anschlag (62) durch ein freies Ende (114) des Anschlagbolzens (112) gebildet ist.

11. Stabilisator nach Anspruch 9 oder 10, **dadurch gekennzeichnet, dass** der Anschlagbolzen (112) als Gewindebolzen ausgebildet ist.

12. Stabilisator nach Anspruch 9 oder 10, **dadurch gekennzeichnet, dass** der Anschlagbolzen (112) verschieblich innerhalb einer entlang der Längsachse (14) des zweiten Stabilisatorglieds (16) ausgebildeten Führungsbohrung (118) gelagert ist, wobei zur Verstellung des Anschlagbolzens (112) ein den Anschlagbolzen (112) beaufschlagender Gewindebolzen (120) vorgesehen ist.

13. Stabilisator nach Anspruch 12, **dadurch gekennzeichnet, dass** dem Anschlagbolzen (112) ein verschiebungshemmendes Arretierungselement (128) zugeordnet ist.

14. Stabilisator nach einem der Ansprüche 11 bis 13, **dadurch gekennzeichnet, dass** dem Gewindebolzen (120) ein die Verstellbarkeit begrenzender Verlierschutz (130) zugeordnet ist.

15. Stabilisator nach Anspruch 1, **dadurch gekennzeichnet, dass** es sich bei dem zweiten Begrenzungsmittel (44) um einen zwischen den beiden Stabilisatorgliedern (12, 16) angeordneten Zwischenring (132) handelt.

16. Stabilisator nach Anspruch 15, **dadurch gekennzeichnet, dass** der Zwischenring (132) zumindest zweigeteilt aufgebaut ist.

17. Stabilisator nach Anspruch 15 oder 16, **dadurch gekennzeichnet, dass** der Zwischenring (132) ein Innengewinde aufweist, das auf ein in einem Endbereich des ersten Stabilisatorglieds (12) ausgebildetes Außengewinde aufschraubbar ist, sodass sich die Lage des zweiten Anschlags (62) durch entsprechendes Auf- oder Abschrauben des Zwischenrings (132) stufenlos anpassen lässt.

## Claims

1. Stabilizer for a lower link of a three-point device extension of a tractor, with a first stabilizer member (12) and a second stabilizer member (16) which is mounted in a spring-movable manner in relation to the first stabilizer member (12) along a common longitudinal axis (14), wherein a first limiting means (42) is provided which is connected to the first stabilizer member (12) and, in a closed position, forms a first stop (58) which interacts with the second stabilizer member (16), for limiting a compression movement occurring between the two stabilizer members (12, 16), **characterized in that** a second limiting means (44) is provided between the two stabilizer members (12, 16), said second limiting means forming a second stop (62) for limiting the compression movement in relation to an associated fixed end stop (36) of the stabilizer (10) for the situation in which the first limiting means (42) is brought into an open position.

2. Stabilizer according to Claim 1, **characterized in that** the first limiting means (42) is designed as an outer blocking flap (46) and the second limiting means (44) as an inner blocking flap (48), wherein the two blocking flaps (46, 48) are connected pivotably to the first stabilizer member (12) by means of at least one axis of rotation (50) running transversely with respect to the longitudinal axis (14) of the stabilizer (10).

3. Stabilizer according to Claim 2, **characterized in that** the first and/or second stop (58, 62) are/is formed by a flattened portion (60, 64) provided on the end side of the outer and/or inner blocking flap (46, 48).

4. Stabilizer according to Claim 2 or 3, **characterized in that** the two blocking flaps (46, 48) are connected to the first stabilizer member (12) so as to be pivotable about a common axis of rotation (50).

5. Stabilizer according to one of Claims 2 to 4, **characterized in that** the outer blocking flap (46) in the closed position at least partially surrounds both the inner blocking flap (48) and the first stabilizer member (12) .

6. Stabilizer according to one of Claims 2 to 5, **characterized in that** the outer blocking flap (46) is connectable to a rear-side fastening point of the tractor by means of a traction cable or a traction chain (70) via a traction tab (68).

7. Stabilizer according to one of Claims 2 to 6, **characterized in that** there can be a coupling element (72) which is attached to the inner blocking flap (48) and by means of which the inner blocking flap (48) can be brought together with the outer blocking flap (46) from a closed position into an open position.

8. Stabilizer according to one of Claims 2 to 7, **characterized in that** the two blocking flaps (46, 48) are each a bent part produced from steel sheet.

9. Stabilizer according to Claim 1, **characterized in that** the second limiting means (44) is designed as a stop pin (112), which is adjustable on the longitudinal axis (14) of the stabilizer (10), for the variable limiting of the compression movement.

10. Stabilizer according to Claim 9, **characterized in that** the second stop (62) is formed by a free end (114) of the stop pin (112).

11. Stabilizer according to Claim 9 or 10, **characterized in that** the stop pin (112) is in the form of a threaded pin.

12. Stabilizer according to Claim 9 or 10, **characterized in that** the stop pin (112) is mounted displaceably within a guide bore (118) formed along the longitudinal axis (14) of the second stabilizer member (16), wherein, in order to adjust the stop pin (112), a threaded pin (120) acting upon the stop pin (112) is provided.

13. Stabilizer according to Claim 12, **characterized in that** the stop pin (112) is assigned a displacement-preventing locking element (128).

14. Stabilizer according to one of Claims 11 to 13, **characterized in that** the threaded pin (120) is assigned a loss guard (130) limiting the adjustability.

15. Stabilizer according to Claim 1, **characterized in that** the second limiting means (44) is an intermediate ring (132) arranged between the two stabilizer members (12, 16).

16. Stabilizer according to Claim 15, **characterized in that** the intermediate ring (132) is constructed at least in two parts.

17. Stabilizer according to Claim 15 or 16, **characterized in that** the intermediate ring (132) has an internal thread which can be screwed onto an external thread formed in an end region of the first stabilizer member (12), and therefore the position of the second stop (62) can be adapted in an infinitely variable manner by corresponding screwing on or unscrewing of the intermediate ring (132).

## Revendications

1. Stabilisateur pour une barre inférieure d'une prise de force à trois points d'un tracteur, avec un premier élément de stabilisateur (12) et un second élément de stabilisateur (16) monté de façon élastiquement mobile le long d'un axe longitudinal commun (14) par rapport au premier élément de stabilisateur (12), dans lequel il est prévu un premier moyen de limitation (42) relié au premier élément de stabilisateur (12), qui dans une position fermée forme une première butée (58) coopérant avec le second élément de stabilisateur (16) pour limiter un mouvement d'enfoncement se produisant entre les deux éléments de stabilisateur (12, 16), **caractérisé en ce qu'**il est prévu entre les deux éléments de stabilisateur (12, 16) un second moyen de limitation (44), qui forme une seconde butée (62) pour la limitation d'un mouvement d'enfoncement par rapport à une butée d'extrémité fixe correspondante (36) du stabilisateur (10), pour le cas où le premier moyen de limitation (42) est amené dans une position ouverte.

2. Stabilisateur selon la revendication 1, **caractérisé en ce que** le premier moyen de limitation (42) est réalisé sous forme de clapet de blocage extérieur (46) et le second moyen de limitation (44) est réalisé sous forme de clapet de blocage intérieur (48), dans lequel les deux clapets de blocage (46, 48) sont reliés au premier élément de stabilisateur (12) de façon pivotante au moyen d'au moins un axe de rotation (50) s'étendant transversalement à l'axe longitudinal (14) du stabilisateur (10).

3. Stabilisateur selon la revendication 2, **caractérisé en ce que** la première et/ou la seconde butée (58, 62) est formée par un méplat (60, 64) prévu frontalement sur le clapet de blocage extérieur et/ou intérieur (46, 48).

4. Stabilisateur selon la revendication 2 ou 3, **caractérisé en ce que** les deux clapets de blocage (46, 48) sont reliés au premier élément de stabilisateur (12) de façon pivotante autour d'un axe de rotation commun (50) .

5. Stabilisateur selon l'une quelconque des revendications 2 à 4, **caractérisé en ce que** le clapet de blocage extérieur (46) dans la position fermée enveloppe au moins en partie aussi bien le clapet de blocage intérieur (48) que le premier élément de stabilisateur (12) .

6. Stabilisateur selon l'une quelconque des revendications 2 à 5, **caractérisé en ce que** le clapet de blocage extérieur (46) peut être relié par l'intermédiaire d'une patte de traction (68) au moyen d'un câble de traction ou d'une chaîne de traction (70) à un point de fixation arrière du tracteur.

7. Stabilisateur selon l'une quelconque des revendications 2 à 6, **caractérisé en ce qu'**il se trouve un élément de couplage (72) placé sur le clapet de blocage intérieur (48), au moyen duquel le clapet de blocage intérieur (48) peut être déplacé de concert avec le clapet de blocage extérieur (46) d'une position fermée à une position ouverte.

8. Stabilisateur selon l'une quelconque des revendications 2 à 7, **caractérisé en ce que** les deux clapets de blocage (46, 48) sont respectivement une pièce pliée fabriquée en tôle d'acier.

9. Stabilisateur selon la revendication 1, **caractérisé en ce que** le second moyen de limitation (44) est réalisé sous la forme d'un boulon de butée (112) déplaçable le long de l'axe longitudinal (14) du stabilisateur (10) pour la limitation variable du mouvement d'enfoncement.

10. Stabilisateur selon la revendication 9, **caractérisé en ce que** la seconde butée (62) est formée par une extrémité libre (114) du boulon de butée (112).

11. Stabilisateur selon la revendication 9 ou 10, **caractérisé en ce que** le boulon de butée (112) est formé par un boulon fileté.

12. Stabilisateur selon la revendication 9 ou 10, **caractérisé en ce que** le boulon de butée (112) est monté de façon déplaçable à l'intérieur d'un perçage de guidage (118) formé le long de l'axe longitudinal (14) du second élément de stabilisateur (16), dans lequel il est prévu un boulon fileté (120) poussant le boulon de butée (112) pour le déplacement du boulon de butée (112).

13. Stabilisateur selon la revendication 12, **caractérisé en ce qu'**un élément d'arrêt (128) bloquant le déplacement est associé au boulon de butée (112).

14. Stabilisateur selon l'une quelconque des revendications 11 à 13, **caractérisé en ce qu'**une protection contre la perte (130) limitant la mobilité est associée au boulon fileté (120).

15. Stabilisateur selon la revendication 1, **caractérisé en ce que** le second moyen de limitation (44) est une bague intermédiaire (132) disposée entre les deux éléments de stabilisateur (12, 16).

16. Stabilisateur selon la revendication 15, **caractérisé en ce que** la bague intermédiaire (132) est réalisée en au moins deux parties.

17. Stabilisateur selon la revendication 15 ou 16, **caractérisé en ce que** la bague intermédiaire (132) présente un filet intérieur, qui peut être vissé sur un filet extérieur formé dans une région d'extrémité du premier élément de stabilisateur (12), de telle manière que la position de la deuxième butée (62) puisse être adaptée en continu par un vissage ou un dévissage correspondant de la bague intermédiaire (132).
